# EUROPEAN PATENT APPLICATION

(11) **EP 4 775 047 A1**
(43) Date of publication of application: **15.07.2026**
(21) Application number: 25150899.0
(22) Date of filing: 09.01.2025
(51) Int. Cl.: A23L 33/21, A23L 33/26, A23L 33/00

(54) **MEAL REPLACEMENTS FOR WEIGHT-CONTROLLING NUTRITION**

(71) Applicant: Pretabolic Health Science GmbH, 50825 Cologne (DE)
(72) Inventor: Lück, Stephan, 95444 Bayreuth (DE); Eßfeld, Dieter, 50937 Cologne (DE); Hitz, Marco, 40211 Düsseldorf (DE)
(74) Representative: dompatent

(57) **Abstract**

The present invention provides a dietary food, in particular a meal replacement, for instance in the form of drinks, desserts, bars, soups, sauces and pastries, for weight-controlling diets, said dietary food comprising 6 wt.% or less than 6 wt.% digestible and energy-providing carbohydrates, a high content of non-metabolizable carbohydrates, and a protein content from 25 wt.% to 50 wt.%. The invention further provides a method for preparing such dietary food and its use in treating diseases connected with pathological overweight.

## Description

The present invention provides a dietary food, in particular a meal replacement, for instance in the form of drinks, desserts, bars, soups, sauces and pastries, for weight-controlling diets, said dietary food comprising 6 wt.% or less than 6 wt.% digestible and energy-providing carbohydrates, a high content of non-metabolizable carbohydrates, and a protein content from 25 wt.% to 50 wt.%. The invention further provides a method for preparing such dietary food and its use in treating diseases connected with pathological overweight.

### Background of the invention

A healthy lifestyle including sports and fasting is one of the core issues in modern society. In case fasting, and especially for fasting subjects with pathological overweight, a vast number of strategies and fasting regimens have been provided so far. A particular dietary food is disclosed in WO 2006081794 A1, wherein a mixture of natural fatty acids with a chain length of up to C 18 and being at least partially saturated, in the form of free fatty acids or the salts thereof or in form of monoglycerides thereof is added to food products. Such food product with added free fatty acids is used for feeding patients with food-related illnesses and illnesses caused by disturbance of the absorption, the decomposition or the elimination of certain dietary components or the secondary products thereof.

However, all dietary food products and their doses available so far are not suitable to satisfy the daily food uptake of a fasting person, i.e., are not representing a meal replacement. Relevant for this is COMMISSION REGULATION (EU) 2016/1413 of 24 August 2016, amending Regulation (EU) No 432/2012 establishing a list of permitted health claims made on foods other than those referring to the reduction of disease risk and to children's development and health. According to said meal replacement regulation a dietary food, for being a true meal replacement, must comply, among others, with a daily energy uptake between 200 and 250 kcal, a fat content of 30% or less, at least 1 g linolenic acid per meal, and from 25 to 30 % of total energy from protein. However, such a meal replacement was not described so far.

### Summary of the Invention

Following the requirements of the Meal Replacement Regulation for weight-controlling diets and searching for a suitable meal replacement for daily single dose administration, it was further intended that the amount of digestible and energy-providing carbohydrates be less than 6 g per 100 g of the mass of the meal replacement. The aim of this reduced digestible carbohydrates is to avoid significant increases in blood glucose levels and associated insulin secretion so to allow effective fasting. It was now found that such meal replacement is available by combining a high content of indigestible carbohydrates, e.g. in the form of mono-, oligo- and polysaccharides with a protein content in the range of 25 % to 50 wt.%.

In a first aspect, the invention thus provides a dietary food for weight-controlling diets, said dietary food comprising 6 wt.% or less than 6 wt.% digestible and energy-providing carbohydrates, a high content of non-metabolizable carbohydrates, and from about 25 wt.% to about 50 wt.% protein, each being based on the dry weight of the total dietary food.

In a preferred embodiment, the high content of indigestible carbohydrates means at least 30 wt.% of non-metabolizable carbohydrates and preferably at least 40 wt.% of such non-metabolizable carbohydrates. In a further preferred embodiment, the dietary food comprises 5 wt.% or less than 5 wt.% digestible and energy-providing carbohydrates. In accordance with the invention, the dietary food may be a drink, paste, powder or bar, wherein a bar is particularly preferred.

In a second aspect, the invention provides a method for preparing the dietary food of the first aspect, which comprises admixing the ingredients of the dietary food and bringing it in the desired form for consumption.

In a third aspect, the invention provides a dietary food of the first aspect for use in treating diseases connected with pathological overweight.

In a fourth aspect, the invention provides a method for treating diseases connected with pathological overweight, said method comprising administering a subject in need of such treatment with a dietary food the first aspect.

In a fifth aspect, the invention provides for the non-therapeutic use of the dietary food of the first aspect for fasting and reducing body weight.

### Detailed Description of the Invention

Non-metabolizable carbohydrates according to the present invention (occasionally also designated non-utilizable or indigestible carbohydrates) are carbohydrates that are not or not completely broken down or metabolized by the body. They provide little or no energy and have little effect on blood sugar levels. Such non-metabolizable carbohydrates include but are not limited to resistant starch (RS), which is defined as "starch and starch degradation products that are not absorbed in the small intestine of healthy people". This means that RS reaches the large intestine undigested, where it is fermented by the bacteria found there (including species of the genus *Bifidobacterium* and *Lactobacillus*)*.* Thus, on the one hand, RS has physiological properties similar to those of other dietary fiber (Achour Let al., Am J Clin Nutr 66:1151-1519 (1997)).

Such non-metabolizable carbohydrates care generally occurring in the following food ingredients/components:
Fibers, e.g. chicory fiber (inulin), polydextrose, acacia fiber, oat fiber, apple fiber, citrus fiber;
sugar alcohols (polyols), e.g. maltitol, erythritol, sorbitol, isomalt, xylitol, lactitol, glycerin, among which glycerin and sorbitol solutions may also serve as humectants; modified carbohydrates, e.g. maltodextrin, resistant dextrin, resistant maize starch; vegetable fibers, e.g. psyllium husks, guar gum, cellulose, guar fibers; and certain non-metabolizable prebiotics, e.g. fructo-oligosaccharides (FOS), galacto-oligosaccharides (GOS), isomalto-oligosaccharides (IMO)

In the present invention the following indigestible carbohydrates components are preferably used: Polydextrose, glycerin, maltitol (in chocolate ingredients), chicory fibers (in the Salted Caramel and Vegan Almond Chocolate bar of the present invention) and maltodextrin. Such preferred non-metabolizable carbohydrates have the following properties:
Polydextrose: Polydextrose is a dietary fiber that is synthesized from glucose. It contains around 98% carbohydrates, of which almost 100% are non-metabolizable carbohydrates.

Glycerin: Glycerin is a humectant and sugar alcohol that is typically obtained as a by-product in the production of vegetable oils such as coconut oil. It contains about 100 % carbohydrates, of which only about 30 % are considered metabolizable carbohydrates (and are calculated in the present invention in that way), while the rest is only partially metabolized or not metabolized at all (the difference in metabolization between glycerin and maltitol is due to the fact that for glycerin the limiting factor is the enzyme activity of the liver, whereas for maltitol it is the intestinal uptake). Maltitol: Maltitol is a sugar alcohol that is often produced by the hydrogenation of maltose from starch. It contains around 100 % carbohydrates, of which around 50 % are non-metabolizable carbohydrates, as maltitol is only partially utilized by the body. Chicory fibers: Chicory fibers (inulin) are obtained from the root of the chicory plant. They consist of about 90 % carbohydrates, of which almost 100 % are classified as non-metabolizable carbohydrates, as inulin primarily contains dietary fiber, which is hardly digested.

Maltodextrin: Maltodextrin is a modified carbohydrate produced by the partial hydrolysis of starch. It contains around 100 % carbohydrates, most of which are metabolized. Only a small proportion (~10-15%) can be considered a non-metabolizable carbohydrate, depending on branching and processing.

Fats according to the present invention include but are not limited to the following compounds:
Fats are essential nutrients that enable energy storage and supply the body with important fatty acids. They serve as a carrier for fat-soluble vitamins (A, D, E, K) and play a role in cell structure and hormone balance. Fats in food occur in the following:
Vegetable oils, e.g. sunflower oil, coconut oil, rapeseed oil, soya oil, palm oil;
animal fats, e.g. butterfat, lard, fish oil;
Cocoa butter, e.g. used in chocolate products; and
nuts and seeds, e.g. almonds, walnuts, linseed, chia seeds.

In the present invention the following fats are preferably used:
Coconut oil, mainly contained in coconut bars, contains medium-chain triglycerides, which are metabolized more quickly; and
cocoa butter, contained in the chocolate ingredients (e.g. white chocolate in coconut bars and dark chocolate in other bars.
Linoleic acid: Linoleic acid is an essential omega-6 fatty acid that is important for cell membrane structure, skin health and hormone production. As the body cannot produce linoleic acid itself, it must be obtained from food.

Generic overview of linoleic acid sources:
Vegetable oils, particularly rich in sunflower oil, soya oil, corn oil and safflower oil; seeds and nuts, e.g. walnuts, linseed, chia seeds; and
certain margarine products: Often enriched with omega-6 fatty acids.

In the present invention the following linoleic acid sources are preferably used: Coconut oil, contains small amounts of linoleic acid, mainly medium-chain fatty acids, but a proportion of essential fatty acids.

Sunflower seeds contain both linoleic acid and other essential fatty acids and are included in all three bars.

Proteins: Proteins are the basic building blocks of the body and are essential for tissue formation, cell repair and enzyme production. They consist of amino acids, some of which (essential amino acids) must be obtained from food.

Generic overview of protein sources:
Animal proteins, e.g. milk protein, whey protein, eggs, fish;
vegetable proteins, e.g. soy protein, pea protein, rice protein, hemp protein; and nuts and seeds, e.g. almonds, chia seeds, linseed.

In the present invention the following proteins are preferably used:
Milk protein, main source of high-quality protein in all bars, particularly rich in essential amino acids;
whey protein concentrate, provides quickly available proteins and is rich in branched-chain amino acids (BCAA);
pea protein and rapeseed protein, included in the vegan version and complement each other well to provide a complete amino acid profile;

Soy protein, in the vegan version for a higher biological value and a complete amino acid profile.

The dietary food of the first aspect of the invention may comprise 5 wt% or less than 5 wt.% of one or more digestible carbohydrates, based on the dry weight of the total dietary food. The digestible carbohydrates may be in the form of mono-, oligo- and polysaccharides. Preferably digestible carbohydrates are selected from digestible carbohydrates and primarily energy-providing (mono-, di- and polysaccharides) such as vegetable starch, dextrins, various sugars (maltose, lactose, sucrose, fructose, glucose, galactose) and their sugar alcohols (such as sorbitol, maltitol, xylitol, mannitol, erythritol, maltitol, threitol and arabitol, with the exception of glycerin), in solid or dissolved form.

The dietary food of the first aspect of the invention may comprises at least 40 wt.%, preferably at least 45 wt.% of one or more non-metabolizable carbohydrates, based on the dry weight of the total dietary food. Such non-metabolizable carbohydrates are selected from fibers, including chicory fiber, polydextrose, acacia fiber, oat fiber, apple fiber, citrus fiber; sugar alcohols, including maltitol, erythritol, sorbitol, isomalt, xylitol, lactitol, glycerin; modified carbohydrates, including maltodextrin, resistant dextrin, resistant maize starch; vegetable fibers, including psyllium husks, guar gum, cellulose and guar fibers; and non-metabolizable prebiotics, including fructo-oligosaccharides, galacto-oligosaccharides and isomalto-oligosaccharides, preferably the non-metabolizable carbohydrates are selected from polydextrose, glycerin, maltitol, chicory fibers and maltodextrin. Combinations of the non-metabolizable carbohydrates referred to above may be used in the dietary food of the invention, for instance the particular combinations of the non-metabolizable carbohydrates utilized in the bars of Examples 2-4 shown in the following Table:

| | |
|---|---|
| Bar type | Ingredients with non- metabolizable carbohydrates |
| Salted caramel | chicory fibers, glycerine, maltodextrin maltitol (in chocolate) |
| Coconut | Polydextrose, glycerine, maltodextrin, maltitol (in chocolate) |
| Vegan almond chocolate | chicory fibers, glycerine, maltitol (in dark chocolate), polydextrose |

The dietary food of the first aspect of the invention may further comprise a fat component having from 5 to less than 30 wt.% of the dietary food, based on the dry weight of the total dietary food. Such fat component preferably comprises at least 5 wt.% polyunsaturated fatty acids and at least 2 wt.% monounsaturated fatty acids; and/or at least 6 wt.% essential fatty acids. It may further have a linoleic acid content of at least 1 wt.%. In particular, the fat component may comprise at least 5 wt.% polyunsaturated fatty acids and at least 2 wt.% monounsaturated fatty acids; and/or at least 6 wt.% essential fatty acids. It may further have a linoleic acid content of at least 1 wt.%.; and/or a linoleic acid content of at least 1, wt.%; and/or may contain almond paste, coconut oil, and/or cocoa butter, preferably from 5 to 15 wt.%, most preferably from 7 to 12 wt.%.

Each of the amounts indicated are based on the dry weight of the total dietary food. The dietary food of the first aspect of the invention may further comprise one or more of the following additional components:
(i) fatty acids, preferably in an amount of 5 to 15 wt.%;
(ii) amino acids and amino acid derivatives (including proteins), preferably in an amount of 25 to 50 wt.%; (iii) minerals and vitamins, preferably in an amount of 2 to 5 wt.%;
(iv) fruits, dried fruits, seeds and parts thereof, preferably in an amount of 3 to 10 wt.%;
(v) aroma and flavoring components, preferably in an amount of 0.1 to 2 wt.%;
(v) coating such as chocolate coating, preferably in an amount of 3 to 8 wt.%;
(vi) humectants and/or binder, preferably in an amount of 3 to 6 wt.%,
(vii) non-carbohydrate fillers, preferably in an amount of 0.5 to 10 wt.%,
each being based on the dry weight of the total dietary food.

Certain additional components include substances included elsewhere, such as amino acid derivatives including proteins, and fatty acids being part of the fats.

In a particular embodiment, the dietary food of the invention is a nutrition bar comprising 30-50 wt.% resistant starch, 20-30 wt.% pea protein isolate, 5-15 wt-% almond paste, 5-15 wt.% oligofructoses, preferably comprising 40-45 wt.% resistant starch, 22-28 wt.% pea protein isolate, 8-12 wt-% almond paste, 8-12 wt.% oligofructoses, 2-3 wt.% almond sticks, 1-2 wt.% chicory fibers and psyllium husk flour each, 3-wt.% chocolate coating and 0.05-0.2 wt.% aroma compounds. Specifically, such bar may comprise components according to one of the following recipes:
(A) 43 wt.% Resistant starch, 26 wt.% pea protein isolate, 0.18 wt.% N-acetyl-L-cysteine, 10 wt.% almond paste, 9.43 wt.% oligofructose, 2.20 wt.% almond sticks, 3.85 wt.% chocolate coating, 1.85 wt.% psyllium husk flour, 1.85 wt.% chicory fiber and 1.38 wt.% glycerol, and optionally further 0.14 wt.% mixed vitamins, 0.05 wt.% algae oil, 0.05 wt.% butter cookie aroma, 0.02 wt.% vanilla aroma;
(B) 14.0 wt.% dark chocolate coating, 23.0 wt.% chicory fiber, 13.2 wt.% canola protein isolate (CanolaPRO^{®}), 11.1 wt.% soy protein isolate, 6.0 wt.% glycerin as humectant, 10.2 wt.% pea protein, 5.0 wt.% sunflower seed, 4.0 wt.% coconut oil, 3.0 wt.% maltodextrin, 2.5 wt.% cocoa powder and 3.5 wt.% almond seed, and optionally further 2.0 wt.% mixed vitamins, 1.0 wt.% Dipotassium phosphate, 0.5 wt.% dicalcium phosphat-dihydrate, 0.5 wt.% trimagnesium dicitrat anhydride, 0.3 wt.% sodium hydrogencarbonate, 0.2 wt.% Tripotassiumcitrat-monohydrate;
(C) 25.0 wt.% polydextrose, 18.0 wt.% milk protein, 12.0 wt.% whey protein concentrate, 10.0 wt.% white chocolate, 8.0 wt.% chicory fiber, 5.0 wt.% coconut oil, 6.0 wt.% glycerine as humectant, 4.0 wt.% sunflower seeds, 3.5 wt.% maltodextrin and 2.5 wt.% cocoa powder, and optionally further 1.0 wt.% natural flavor, 2.0 wt.% vitamins and minerals, 2.0 wt.% sweetener, 0.5 wt.% trimagnesium dicitrate anhydride, 0.3 wt.% dipotassium phosphate and 0.2 wt.% soy lecithin;
(D) 19.0 wt.% milk protein, 27.0 wt.% chicory fibers, 6.0 wt.% glycerine as humectant, 10.0 wt.% milk chocolate, 5.0 wt.% sunflower seeds, 3.5 wt.% maltodextrin, 14.0 wt.% whey protein concentrate, 2.5 wt.% cocoa powder and 4.0 wt.% coconut oil, and optionally further 0.5 wt.% iodised salt, 0.5 wt.% natural flavor, 2.5 wt.% vitamins and minerals, 1.0 wt.% trimagnesium dicitrate anhydride, 1.0 wt.% dipotassium phosphate, 1.5 wt.% soy lecithin, 2.0 wt.% sucralose (sweetener).

The remainder in each recipe being water and nutritively less important or irrelevant components and/or the optional components.

The second aspect of the invention refers to the production of the dietary food of the first aspect of the invention by admixing its essential components. While the preparation of a liquid food product or drink is trivial, the production of a solid food product may be more challenging and time-demanding and may require a particular order of steps. For example, for the production of the bar, the liquid and syrup ingredients may first be put in a batter mixer. Then all the powdered ingredients. Instead of digestible carbohydrates and primarily energy-providing (mono-, di- and polysaccharides) such as vegetable starch, dextrins, various sugars (maltose, lactose, sucrose, fructose, glucose, galactose) and their sugar alcohols (sorbitol, maltitol, xylitol, mannitol, erythritol, maltitol, threitol, arabitol) with the exception of glycerol, in solid or dissolved form, a syrup of indigestible (resistant starch) in combination with oligofructose is used. These two substances are also called dietary fiber and are calculated and labeled as energy with 2 kcal / 8 kJ (according to REGULATION (EU) No. 1169/2011 OF THE EUROPEAN PARLIAMENT AND OF THE COUNCIL of 25 October 2011). Due to the high fiber content in the bar, this meets the prescribed energy content for a meal replacement for weight control nutrition.

As a further ingredient, almond paste is added, which is also the fat-supplying source. The fat of the almond is characterized by a very high content of monounsaturated and polyunsaturated fatty acids. In addition, the puree also serves as a natural source of fiber. As a natural ingredient, almonds also possess essential minerals and trace elements. The prescribed content of 1 g of linoleic acid is more than met by the almond paste. The amount of almond paste was determined so that the regulation regarding the maximum fat content is also met here. Next, pea protein is added. Since this example is a vegan bar, the protein comes from peas. Due to the low biological value of pea protein, the amino acid N-acetyl-L-cysteine is added in a defined amount to comply with the prescription for a meal replacement for weight control nutrition.

Last but not least, other ingredients such as minerals and vitamins are added in the prescribed quantity, aroma-imparting substances and, to protect the contained fat from oxidation, the antioxidant tocopherol acetate is added in the necessary quantity and the entire mass is kneaded well. To supplement and optimize the nutritional content and technological property, algae oil (improving the fatty acid pattern) and glycerol (as a humectant) are added. Now bars of 70 g are made from the mass. A coating of sugar-free chocolate glaze strengthens the consistency of the bar and adds flavor.

The dietary food, if utilized in the third or fourth aspect of the invention may further contain additional pharmaceutically active ingredients and/or pharmaceutically acceptable carrier and filler.

The invention is described at the hand of the following examples, which are not to be construed as limiting the invention.

### Examples

### Material and Methods

The following ingredients, in superior nutritional quality, were utilized for preparing the bars prepared in the examples:
Resistant starch;
pea protein isolate;
canola protein isolate (CanolaPRO^{®})
N-acetyl-L-cysteine;
oligofructose;
maltodextrin;
almond paste;
Almond seed and almond sticks;
Sunflower seed;
psyllium husk flour;
chicory fiber;
glycerol (humectant);
Dipotassium phosphate, Dicalcium phosphat-dihydrate, Trimagnesium dicitrat-anhydride, Tripotassiumcitrat-monohydrate, sodiumhydrogencarbonate (baking agent) - specify purity and producer of each chemical agent
algae oil;
aroma (butter cookie aroma, vanilla aroma)
chocolate coating, e.g. a dark chocolate coating (with chocolate liquor, maltitol, cocoa butter, soy lecithin, vanilla) or a milk chocolate coating
mixed vitamins, notably with the vitamin components of the table shown in Examples 2 to 4 below.

### Preparation of a Bar

For preparing the bar, in a first step the liquid and syrup ingredients are placed in a batter mixer and are mixed for 1 to 10 min at room temperature. As a second step all the powdered ingredients are added and are mixed for 1 to 20 min at room temperature. In a third step, fat ingredients such as almond paste is added, and again mixed for 1 to 10 min at room temperature. As a fourth step, fiber components, nut components and aroma components are added and are mixed for 1 to 10 min at room temperature. The resulting raw mass is formed into a bar and is dried/baked at 30 to 50 °C or cooled to a temperature below room temperature (5 to 20 °C) to solidify the bar. As a final step, the baked/solidified bar is coated with a covering material (chocolate).

### Determination of Nutritional Value of the Food Product

The nutritional values of the resulting Food product are calculated based on the individual product specifications and/or the general information from the Federal Food Code.

### Example 1: Nutrition Bar

A typical product for the invention is a nutrition bar based on the following general recipe and prepared according to the general procedure set forth under materials and methods above:

| General nutrition bar recipe | Amount (g per 100 g) | Amount (g per serving of 70 g) |
|---|---|---|
| Resistant starch | 43.00 | 27.95 |
| Pea protein isolate | 26.00 | 16.90 |
| N-Acetyl-L-cysteine | 0.18 | 0.12 |
| Almond paste | 10.00 | 6.50 |
| Oligofructose | 9.43 | 6.13 |
| Almond sticks | 2.20 | 1.43 |
| Chocolate coating | 3.85 | 2.50 |
| Psyllium husk flour | 1.85 | 1.20 |
| Chicory fiber | 1.85 | 1.20 |
| Glycerol | 1.38 | 0.90 |
| Mixed vitamins | 0.14 | 0.09 |
| Algae oil | 0.05 | 0.03 |
| Aroma (butter cookie) | 0.05 | 0.03 |
| Aroma (vanilla) | 0.02 | 0.01 |

The resulting nutrition bar has the nutritional value shown in the following Tables.

| Nutritional value: | per 100 g | per piece (70 g) |
|---|---|---|
| energy (kcal) | 301 | 211 |
| energy (kJ) | 1253 | 877 |
| fat (g) | 10.0 | 7.0 |
| saturated fatty acids (g) | 2.1 | 1.5 |
| mono-unsaturated fatty acids (g) | 2.0 | 1.4 |
| polyunsaturated fatty acids (g) | 6.6 | 4.6 |
| essential fatty acids(g) | 6.40 | 4.5 |
| linoleic acid (g) | 1.63 | 1.14 |
| linolenic acid (g) | 0.04 | 0.03 |
| carbohyderates(g) | 3.6 | 2.5 |
| polyhydric alcohols thereof | 0.9 | 0.6 |
| sugar (g) | 2.0 | 1.4 |
| protein (g) | 24.0 | 16.8 |
| fiber (g) | 45.4 | 31.8 |
| salt (g) | 0.51 | 0.36 |

This represents the following ingredients as defined in COMMISSION REGULATION (EU) 2016/1413:

| | | |
|---|---|---|
| per nutrition bar (of 70 g) | | |
| requirement nutritional value: | 9 | kcal |
| protein (per 100 g) | 16.79 | 67.15 |
| % of total energy | | 31.8 |
| fat (per 100 g) | 7.01 | 63.06 |
| % of total energy | | 29.94 |
| fibers | 31.78 | 63.57 |
| ca rbohyd rates | 2.,54 | 10.16 |
| gross calorific value | | 203.93 |
| nutritional value according to overview of COMMISSION REGULATION (EU) Nr. 1169/2011 | | 210.64 |

The linoleic acid requirements are fulfilled as can be seen in the following table.

| almonds | 9 |
|---|---|
| amount nutritional bar | 7,93 |
| fat content/100 g | 59,10 |
| linoleic acid content/100 g | 13,30 |
| linoleic acid content nutritional bar | 8,65 |
| source: | BLS 3.0 Extra |

### Example 2: Vegan Almond Chocolate Bar

The bar with the recipe shown below was prepared according to the general procedure set forth above.

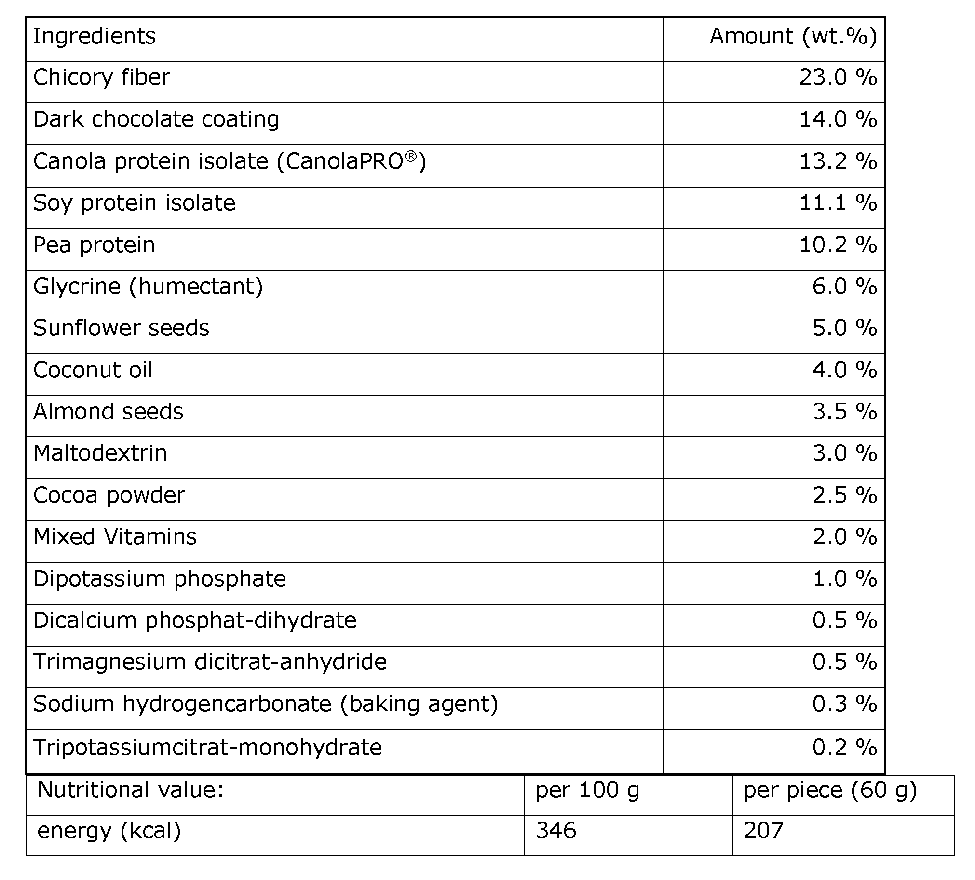

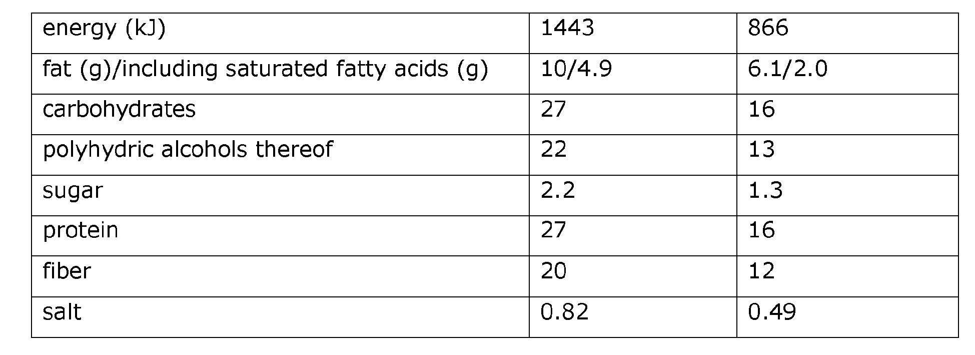

### Vitamins und Minerals

| Nutrient | Per Portion (60 g) | % NRV* |
|---|---|---|
| Vitamin A | 267,45 µg | 33 % |
| Vitamin D | 161,96 µg | 3239 % |
| Vitamin E | 4,29 mg | 36 % |
| Vitamin K | 37,5 µg | 50 % |
| Vitamin C | 26,6 mg | 33 % |
| Thiamin (Vitamin B1) | 0,34 mg | 31 % |
| Riboflavin (B2) | 0,47 mg | 34 % |
| Niacin (B3) | 5,36 mg | 34 % |
| Vitamin B6 | 0,46 mg | 33 % |
| Folic acid | 67,19 µg | 34 % |
| Vitamin B12 | 0,8 µg | 32 % |
| Biotin | 16,67 µg | 33 % |
| Pantothenic acid (B5) | 2 mg | 33 % |
| Potassium | 646,78 mg | 32 % |
| Calcium | 275,28 mg | 34 % |
| Phosphorous | 212,84 mg | 30 % |
| Magnesium | 127,35 mg | 34 % |
| Iron | 68,43 mg | 489 % |
| Zink | 3,14 mg | 31 % |
| Copper | 0,3 mg | 30 % |
| Manganese | 0,77 mg | 39 % |
| Selenium | 17,13 µg | 31 % |
| Chromium | 16,28 µg | 41 % |
| Iodine | 45,01 µg | 30 % |

| | | |
|---|---|---|
| * NRV = nutrition reference value (reference amount for the daily intake of the average adult). | | |

### Example 3: Coconut bar

The bar with the recipe shown below was prepared according to the general procedure set forth above.

| Ingredients | Amount (wt.%) |
|---|---|
| Polydextrose | 25.0 % |
| Milk protein | 18.0 % |
| Whey protein concentrate | 12.0 % |
| White chocolate (maltitol, cocoa butter, skimmed milk powder, lecithin, vanilla) | 10.0 % |
| Chicory fiber | 8.0 % |
| Glycerine (humectant) | 6.0 % |
| Coconut oil | 5.0 % |
| Sunflower seeds | 4.0 % |
| Maltodextrin | 3.5 % |
| Cocoa powder | 2.5 % |
| Sweetener (maltitol, sucralose) | 2.0 % |
| Vitamins and minerals | 2.0 % |
| Natural flavour | 1.0 % |
| Trimagnesium dicitrate anhydride | 0.5 % |
| Dipotassium phosphate | 0.3 % |
| Lecithin (soya) | 0.2 % |

| | | |
|---|---|---|
| Nutritional information - | per 100 g | Per bar (60 g) |
| Energy: | approx. 340 kcal | approx. 204 kcal |
| Protein: | 24 g | 14.4 g |
| Fat/included saturated fatty acids: | 11 g/5.4 g) | 6.6 g/3.24 g |
| Metabolizable carbohydrates | 5.5 g | 3.3 g |
| included: sugar/polyols | 2.7 g/1.2 g | 1.62 g/0.72 g |
| Dietary fiber | 15 g | 9g |
| Salt: | 0.66 g | 0.40 g |

### Example 4: Salted caramel bar

The bar with the recipe shown below was prepared according to the general procedure set forth above.

| Ingredients | Amount (wt.%) |
|---|---|
| Chicory fibers | 27.0 % |
| Milk protein | 19.0 % |
| Whey protein concentrate | 14.0 % |
| Milk chocolate (maltitol, cocoa butter, skimmed milk powder, cocoa mass, lecithin, vanilla) | 10.0 % |
| Glycerin (humectant) | 6.0 % |
| Sunflower seeds | 5.0 % |
| Coconut oil | 4.0 % |
| Maltodextrin | 3.5 % |
| Cocoa powder | 2.5 % |
| Sweetener (maltitol, sucralose) | 2.0 % |
| Iodised salt | 0.5 % |
| Natural flavor | 0.5 % |
| Vitamins and minerals | 2.5 % |
| Trimagnesium dicitrate anhydride | 1.0 % |
| Dipotassium phosphate | 1.0 % |
| Lecithin (soya) | 1.5 % |

| Nutritional information - | per 100 g | Per bar (60 g) |
|---|---|---|
| Energy: | approx. 360 kcal | approx. 216 kcal |
| Protein | 25 g | 15 g |
| Fat/included saturated fatty acids: | 11 g/5.3 g | 6.4 g/3.2 g) |
| Metabolizable carbohydrates: | 6.0 g | 3.6 g |
| included: sugar/polyols | 4.3 g/26 g(?) | 2.6 g/16 g(?) |
| Dietary fiber: | 16 g | 9.3 g |
| Salt: | 0.71 g | 0.43 g |

## Claims

**1.** A dietary food for weight-controlling diets, said dietary food comprising 6 wt.% or less than 6 wt.% digestible and energy-providing carbohydrates, at least 30 wt.% of non-metabolizable carbohydrates, and from 25 wt.% to 50 wt.% protein, each being based on the dry weight of the total dietary food.

**2.** The dietary food of claim 1, which is a meal replacement, preferably
(i) is in the form of drinks, desserts, bars, soups, sauces and pastries; and/or
(ii) has a nutritional value from about 250 to about 350 kcal per 100 g of the dietary food; and/or
(iii) has a unit weight of about 70 g or 60 g and a nutritional value of from about 200 to about 250 kcal.

**3.** The dietary food of claim 1 or 2, wherein
(i) the dietary food comprises 5 wt% or less than 5 wt.% of digestible carbohydrates, based on the dry weight of the total dietary food; and/or
(ii) the digestible carbohydrates are in the form of mono-, oligo- and polysaccharides, preferably are selected from digestible carbohydrates and primarily energy-providing (mono-, di- and polysaccharides) such as vegetable starch, dextrins, various sugars (maltose, lactose, sucrose, fructose, glucose, galactose) and their sugar alcohols (sorbitol, maltitol, xylitol, mannitol, erythritol, maltitol, threitol, arabitol) with the exception of glycerol, in solid or dissolved form.

**4.** The dietary food of any one of claims 1 to 3, wherein
(i) the dietary food comprises at least 40 wt.%, preferably at least 45 wt.% of non-metabolizable carbohydrates, based on the dry weight of the total dietary food; and/or
(ii) the non-metabolizable carbohydrates are selected from fibers, including chicory fiber, polydextrose, acacia fiber, oat fiber, apple fiber, citrus fiber; sugar alcohols, including maltitol, erythritol, sorbitol, isomalt, xylitol, lactitol, glycerin; modified carbohydrates, including maltodextrin, resistant dextrin, resistant maize starch; vegetable fibers, including psyllium husks, guar gum, cellulose and guar fibers; and non-metabolizable prebiotics, including fructo-oligosaccharides, galacto-oligosaccharides and isomalto-oligosaccharides, preferably the non-metabolizable carbohydrates are selected from polydextrose, glycerin, maltitol, chicory fibers and maltodextrin.

**6.** The dietary food of any one of claims 1 to 5, wherein
(i) the dietary food comprises 25 wt.% to 45 wt.% protein, preferably 30 wt.% to 40 wt.% protein, based on the dry weight of the total dietary food; and/or
(ii) the protein is selected from animal proteins, including milk protein, whey protein, eggs and fish; vegetable proteins, including soy protein, pea protein, rice protein, hemp protein; and nuts and seeds, including almonds, chia seeds and linseed, preferably the proteins are selected from milk protein, whey protein concentrate, pea protein, rapeseed protein, and soy protein.

**7.** The dietary food of any one of claims 1 to 6, further comprising a fat component having from 5 to less than 30 wt.% of the dietary food, based on the dry weight of the total dietary food, wherein the fat component preferably comprises
(i) at least 5 wt.% polyunsaturated fatty acids and at least 2 wt.% monounsaturated fatty acids; and/or
(ii) at least 6 wt.% essential fatty acids; and/or
(iii) has a linoleic acid content of at least 1 wt.%,
each being based on the dry weight of the total dietary food.

**8.** The dietary food of claim 6, wherein the fat component comprises
(i) at least 5 wt.% polyunsaturated fatty acids and at least 2 wt.% monounsaturated fatty acids; and/or
(ii) at least 6 wt.% essential fatty acids; and/or
(iii) has a linoleic acid content of at least 1, wt.%; and/or
(iv) almond paste, coconut oil, and/or cocoa butter, preferably from 5 to 15 wt.%, most preferably from 7 to 12 wt.%,
each being based on the dry weight of the total dietary food.

**9.** The dietary food of any one of claims 1 to 8, wherein the dietary food further comprises one or more of the following:
(i) fatty acids, preferably in an amount of 5 to 15 wt.%;
(ii) amino acids and amino acid derivatives, preferably in an amount of 25 to 50 wt.%;
(iii) minerals and vitamins, preferably in an amount of 2 to 5 wt.%;
(iv) fruits, dried fruits, seeds and parts thereof, preferably in an amount of 3 to 10 wt.%;
(v) aroma and flavoring components, preferably in an amount of 0.1 to 2 wt.%;
(v) coating such as chocolate coating, preferably in an amount of 3 to 8 wt.%;
(vi) humectants and/or binder, preferably in an amount of 3 to 6 wt.%,
(vii) non-carbohydrate fillers, preferably in an amount of 0.5 to 10 wt.%,
each being based on the dry weight of the total dietary food.

**10.** The dietary food of any one of claims 1 to 9, which is a nutrition bar comprising 30-50 wt.% resistant starch, 20-30 wt.% pea protein isolate, 5-15 wt-% almond paste, 5-15 wt.% oligofructoses, preferably comprising 40-45 wt.% resistant starch, 22-28 wt.% pea protein isolate, 8-12 wt-% almond paste, 8-12 wt.% oligofructoses, 2-3 wt.% almond sticks, 1-2 wt.% chicory fibers and psyllium husk flour each, 3 wt.% chocolate coating and 0.05-0.2 wt.% aroma compounds, and most preferably comprising:
(A) 43 wt.% resistant starch, 26 wt.% pea protein isolate, 0.18 wt.% N-acetyl-L-cysteine, 10 wt.% almond paste, 9.43 wt.% oligofructose, 2.20 wt.% almond sticks, 3.85 wt.% chocolate coating, 1.85 wt.% psyllium husk flour, 1.85 wt.% chicory fiber and 1.38 wt.% glycerol, and optionally further 0.14 wt.% mixed vitamins, 0.05 wt.% algae oil, 0.05 wt.% butter cookie aroma, 0.02 wt.% vanilla aroma;
(B) 14.0 wt.% dark chocolate coating, 23.0 wt.% chicory fiber, 13.2 wt.% canola protein isolate (CanolaPRO^{®}), 11.1 wt.% soy protein isolate, 6.0 wt.% glycerin as humectant, 10.2 wt.% pea protein, 5.0 wt.% sunflower seed, 4.0 wt.% coconut oil, 3.0 wt.% maltodextrin, 2.5 wt.% cocoa powder and 3.5 wt.% almond seed, and optionally further 2.0 wt.% mixed vitamins, 1.0 wt.% Dipotassium phosphate, 0.5 wt.% dicalcium phosphat-dihydrate, 0.5 wt.% trimagnesium dicitrat anhydride, 0.3 wt.% sodium hydrogencarbonate, 0.2 wt.% Tripotassiumcitrat-monohydrate;
(C) 25.0 wt.% polydextrose, 18.0 wt.% milk protein, 12.0 wt.% whey protein concentrate, 10.0 wt.% white chocolate, 8.0 wt.% chicory fiber, 5.0 wt.% coconut oil, 6.0 wt.% glycerine as humectant, 4.0 wt.% sunflower seeds, 3.5 wt.% maltodextrin and 2.5 wt.% cocoa powder, and optionally further 1.0 wt.% natural flavor, 2.0 wt.% vitamins and minerals, 1.2 wt.% sweetener, 0.5 wt.% trimagnesium dicitrate anhydride, 0.3 wt.% dipotassium phosphate and 0.2 wt.% soy lecithin;
(D) 19.0 wt.% milk protein, 27.0 wt.% chicory fibers, 6.0 wt.% glycerine as humectant, 10.0 wt.% milk chocolate, 5.0 wt.% sunflower seeds, 3.5 wt.% maltodextrin, 14.0 wt.% whey protein concentrate, 2.5 wt.% cocoa powder and 4.0 wt.% coconut oil, and optionally further 0.5 wt.% iodised salt, 0.5 wt.% natural flavor, 2.5 wt.% vitamins and minerals, 1.0 wt.% trimagnesium dicitrate anhydride, 1.0 wt.% dipotassium phosphate, 1.5 wt.% soy lecithin, 2.0 wt.% sucralose,
the remainder in each recipe being water and nutritively less important or irrelevant components and/or the optional components.

**11.** The dietary food of any one of claims 1 to 9, which is a drink, paste, powder or bar.

**12.** A method for preparing the dietary food of any one of claims 1 to 11 which comprises admixing the ingredients of the dietary food and bringing it in the desired form for consumption.

**13.** The method of claim 12, wherein the dietary food is in form of a bar and the method further comprises
(i) drying, heating, cooling and/or concentrating the admixed ingredients; and/or
(ii) applying a coating.

**14.** A dietary food of any one of claims 1 to 11 for use in treating diseases connected with pathological overweight.

**15.** A non-therapeutic use of the dietary food method of any one of claims 1 to 11 for fasting and reducing body weight.
